# EUROPEAN PATENT SPECIFICATION

(11) **EP 1 589 855 B1**
(45) Date of publication and mention of the grant of the patent: **16.07.2014**
(21) Application number: 04706103.1
(22) Date of filing: 29.01.2004
(51) Int. Cl.: A47G 27/04

(54) **ANCHOR SHEET**
HAFTUNTERLAGE
FEUILLE D'ANCRAGE

(30) Priority: 30.01.2003 US 443564 P
(43) Date of publication of application: 02.11.2005
(73) Proprietor: Pacione, Joseph Rocco, New Market, Ontario L3Y 4V9 (CA); Pacione, John Anthony, New Market, Ontario L3X 1M6 (CA); TAC-FAST SYSTEMS S.A., 1752 Villars-sur-Glâne 2 (CH)
(72) Inventor: PACIONE, Joseph, Rocco, New Market, Ontario L3Y 4V9 (CA); PACIONE, John, Anthony, New Market, Ontario L3X 1M6 (CA)
(74) Representative: Vossius & Partner
(86) International application number: PCT/CA2004/000117
(87) International publication number: WO 2004/066795

(56) References cited:
- WO-A-01/81771
- US-A1- 2002 124 515
- US-A1- 2002 124 515
- US-A1- 2003 110 728
- US-B1- 6 298 624

## Description

### FIELD OF THE INVENTION

This invention concerns improvements to an anchor sheet having hooks across one side for use under carpets or other decorative coverings as described, for example in United States Patent. Nos. US-A-2002 0124515, 6,306,477 (Pacione, October 23, 2001), 6,298,624 (Pacione, October 9, 2001), 6,395,362 (Pacione, May 23, 2002), and PCT/CA 00/00681 (Paciione et al.), published under WO 00/74544 on December 14, 2000.

### BACKGROUND OF THE INVENTION

The earlier Pacione cases generally disclose an anchor sheet which can be supplied in various shapes and sizes, with or without a pre-attached decorative covering. These earlier cases also describe how individual sheets can together form a contiguous mass of anchor sheet to provide a field of hooks which engage loops on the underside of an overlying flooring, particularly carpet pieces. Such a contiguous mass can be formed by attaching the anchor sheets directly together, either by overlapping or abutting or by the use of attachment devices aided by the bridging of neighbouring sheets by the overlying covering. Such mass can be free floating or attached to the floor.

As discussed in the earlier Pacione cases, the current inventor has invented an anchor sheet (in some contexts referred to as a hook plate or a module) which, when installed, acts to tie decorative covering together as a functional unit and to add mass and stability to such unit, particularly in the case of a unit having a flexible decorative covering such as a carpet. The anchor sheet may be substantially covered over one side with hooks for anchoring a decorative covering thereto by engagement of complementary loops on the under side of the decorative covering. The anchor sheet itself may be attached to an underlying substrate, such as a floor or wall, or it may be loose laid on a floor where the anchor sheet may have sufficient mass to prevent movement of the anchor sheet.

### SUMMARY OF THE INVENTION

The present invention provides an improved anchor sheet having desirable characteristics when in place under a floor covering.

It is possible, generally even preferred, when using coverings in combination with the anchor sheet of the present invention to use a floor covering that includes little or no cushion layer as is often provided in carpet by a foam layer, e.g., as by urethane foam. The benefits of an anchor sheet of the present invention are most evident when it is used in combination with such a covering having little or no distinct cushioning layer in the covering.

An anchor sheet of the present invention provides an overlying plastic sheet and an underlying cushioning layer. An anchor sheet made up of a top plastic layer and underlying cushion has been generally previously described, as in United States Patents Nos. 6,298,624, 6,306,477, and 6,395,362 and WO 00/74544.

In a broad aspect, the invention is an anchor sheet made up of a plastic sheet and an underlying resilient layer secured thereto. The plastic sheet has a thickness of between 1/16 inches and 1/4 inches and having a flexural modulus (ASTM D790) of between 700 and 3600 MPa. The resilient layer has a compression force deflection (ASTM D3574 - C) that is within about 30 percent of the compression force deflection of a low density polyethylene layer 3/8 thick and a density of 30 kg/m³. A value within about 30 percent of the compression force deflection of the indicated material can be up to 30 percent more than the value measured for the indicated material or down to 30 percent less than the value measured for the indicated material.

When included as part of a carpet installation having an overlying carpet having no rubber or urethane foam layer, for example, an anchor sheet of the present invention provides a desirable "feel" or "give" as a person walks over the installation. With the present invention, a carpet having little or no internal resilient layer or cushion can be used, resulting in less stress on the carpet fibers and primary backing. The anchor sheet can also provide the required level of sturdiness so that furniture can be placed on or moved over the installation and is relatively resistant to puncture, under normal wear. The lower layer includes a suitable level of resiliency for installation atop, for example, a concrete floor of a newly constructed office building to suitably ride over imperfections therein.

Related to the invention(s) disclosed herein are invention(s) in the following United States provisional patent applications, all filed concurrently herewith and incorporated by reference:
United States Provisional Patent Application entitled "Carpet tile, installation, and methods of manufacture and installation thereof". This application shows coverings that can be used with an anchor sheet of the present invention;
United States Provisional Patent Application entitled "System and methods of manufacturing hook-plates". This application shows a method for manufacturing an upper plastic layer that can be used as the upper portion of the present invention;
United States Provisional Patent Application entitled "Ultrasonic welding of resilient layers to plates". This application shows a method for securing a cushioning layer of the present invention to the upper plastic layer;
United States Provisional Patent Application entitled "Floor covering having a removable decorative inlay". This application shows a particular covering arrangement that can be used with the present invention; and
United States Provisional Patent Application entitled "Anchor sheet positioning and connection system". This application shows ways and means for connecting anchor sheets to each other.

In a further aspect of the invention the sheet has a resilient layer made from low-density polyethylene.

If polypropylene is used for the anchor sheet and with a resilient layer made of low-density polyethylene, the preferred thickness of the anchor sheet is about 0.125 inches. Further experimentation has shown the preferred size of the anchor sheet and the preferred way of connecting the anchor sheets together is as follows. It has been found that one size of anchor sheet of approximately 24" x 24" square (taking into account some possible geometric variation along the edges, usually the corners, to accommodate devices for attaching neighboring sheets to each other) is preferred with an overlap/underlap area provided between adjacent sheets, so that the sheets overlap to form a planar surface. However, with a connector disclosed in the above-detailed application entitled "Anchor sheet positioning and connection system", no connection of the sheets to the floor, or directly to each other at the overlap area, is necessarily required.

Other additional features of the preferred anchor sheet are additional aspects of the invention disclosed herein and are described below and outlined in the attached claims.

### BRIEF DESCRIPTION OF THE DRAWINGS

The present invention will be further understood from the following detailed description of an embodiment of the invention, with reference to the drawings in which:
Figure 1 shows an anchor sheet in simplified form with an underpad according to this invention;
Figure 2 shows an anchor sheet in plan view having overlapping edges in addition to the cutaway portions for the cornerpieces;
Figure 3 shows a cornerpiece to be used with certain geometric shapes of anchor sheets;
Figure 4 shows an embodiment with two differently configured anchor sheets;
Figure 4a shows another embodiment with two differently configured anchor sheets;
Figure 4b is a section through line 4b-4b of Figure 4a;
Figure 5 is a section through line 5-5 of Figure 4;
Figure 6 is a section through line 6-6 of Figure 4; and
Figure 7 shows an embodiment of an interlocking anchor sheet.

### DESCRIPTION OF PREFERRED EMBODIMENTS

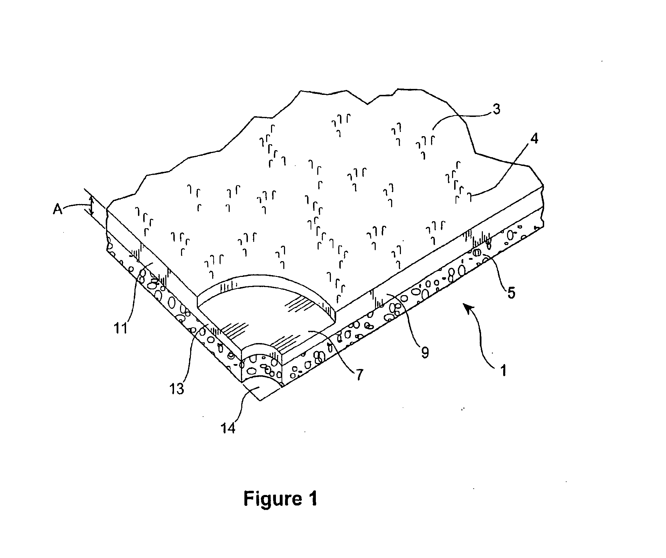

Referring to Figure 1, an anchor sheet 1 is provided. Anchor sheet 1 is placed on or attached to a surface such as floor (not shown). In the present embodiment, anchor sheet 1 is in the shape of a square. Anchor sheet 1 may alternatively be configured in any shape that can be conveniently abutted with another piece to create a floor pattern such as, for instance, a rectangle, a hexagon or an octagon or a mixture thereof. Generally, the preferred shape will be an equilateral polygon, but a rectangle or any other shape may also be used as appropriate. Typically, a shape will be chosen which allows a planar surface to be created out of a single major piece. Such shape can have a countersink along one edge to receive an overlapped portion of an adjacent similar sheet. However, different shapes can be used, having any number of edge areas which are countersunk from the top surface. Additional sheets can be put into this area. In Figure 1, anchor sheet 1 contains a top surface layer 3 having hooks 4 thereacross. Top surface layer 3 is thin, flexible and relatively rigid. It also has a countersunk area 7 which can be used by an overlap portion of an adjacent sheet of the same or different shape or for an attachment piece.

Anchor sheet 1 may also include a cushion or resilient layer 5, which is attached to a side of anchor sheet 1 opposite to hooks 4. When installed, resilient layer 5 is located between anchor sheet 1 and the underlying floor. In this configuration, resilient layer 5 provides resilience to the anchor sheet when a downward force is applied thereto. Similarly, if an overlayment or cover, such a decorative covering (not shown), is attached to or supported by anchor sheet 1, then the decorative covering will be similarly cushioned. The decorative covering may be a carpet overlaid on top of the anchor sheet. Resilient layer 5 may also be used to add mass to anchor sheet 1 to inhibit movement thereof. Furthermore, resilient layer 5 may be manufactured to have a greater coefficient of friction with the floor than anchor sheet 1 in order to reduce movement of resilient layer 5 (and, by connection, anchor sheet 1 and the decorative covering) relative to the floor. However, it should be emphasized that cushioning is not necessary for anchor sheet 1 to function, but such cushioning can have at least the advantages described above, depending on the characteristics of the overlayment and the intended use of anchor sheet 1.

The anchor sheet is relatively rigid in the sense that it is not tape or cloth like. Anchor sheet 1 can have the right degree of "give", so that a user can experience some cushioning effect from resilient layer 5 below the anchor sheet, but with some level of rigidity so that the load of walking is transmitted across a larger surface and does not "dig" into resilient layer 5. This "give" is a product of the combination of the "stiffness" common of the anchor sheet and the "compressibility" of the resilient layer. To achieve a "feel" it is possible to have a more stiff anchor sheet and a more compressible resilient layer or it is possible to have a less stiff anchor sheet and less compressible resilient layer. However, all of the preferred combinations shown will work, subject to the application and the personal preference of the user.

Hooks 4 of top surface layer 3 attach to the loops of an overlying carpet (not shown). Hooks 4 can be attached to sheet 1 by any convenient means, but injection molding is preferred. It is possible for the hook material to be a different plastic or polymer material, and even applied as a film with adhesive, since hooks 4 may need to be relatively more resilient and flexible than the anchor sheet 1 itself. In this case, a laminate anchor sheet 1 rather than unitary construction can be used. Hooks 4 have stems 1 mm high and 0.55 mm in diameter with a stem density of approximately 230 stems per square inch of top surface layer 3. The ratio of stem height to diameter is preferably about 2:1, and may be as great as 10:1. The stem diameter may be in the general range of 0.3 to about 0.9 mm. Stem diameters of as small as 0.1 mm have been found to be acceptable.

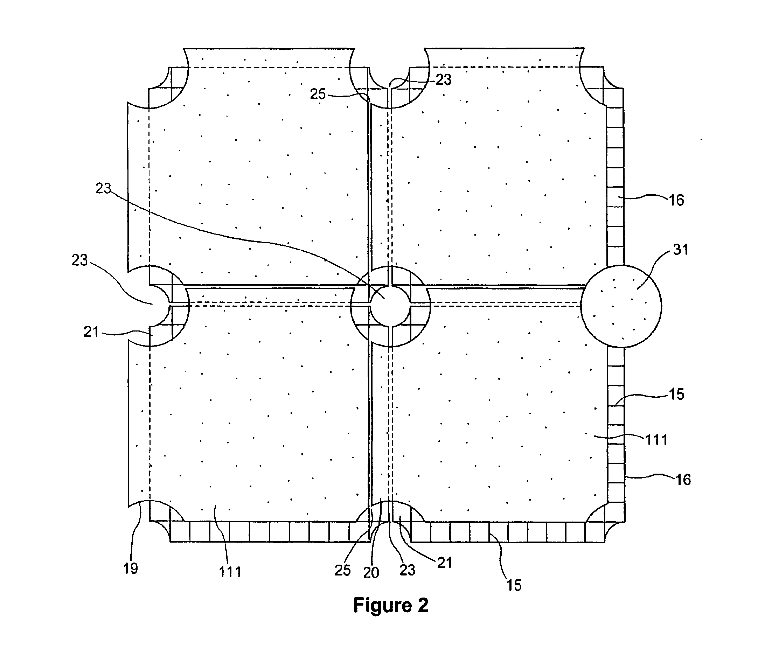

When the density of hooks 4 is approximately 230 per square inch, nearest-neighbour hooks are spaced about 1.8 mm from each other, and are arranged in a grid of equilateral triangles so that each hook has six nearest neighbours. In this configuration, there are approximately 128,000 stems on a 24 by 24-inch anchor sheet 1. Sheets having as many as 330 stems per square inch may be used as well. While a single anchor sheet 1 may be installed, in the preferred embodiment, an anchor sheet subfloor comprising two or more anchor sheets 1 is installed (as illustrated, in part, in Figure 2).

As seen in Figure 1, anchor sheet 1 has a thickness A. The appropriate thickness A will depend on the intended use of the anchor sheet, and may vary with the type of overlayment to be used. The preferred thickness A will generally not be less than 0.062 inches. One preferred thickness A is about 0.125 inches, but the thickness A may preferably be as much as 0.5 inches or more in some applications, for example in situations where thick flooring (not shown) is replaced, or where a thick anchor sheet needs to be used to create a level surface with an adjacent surface.

The appropriate thickness of resilient layer 5 may also vary depending on the intended use of the anchor sheet, and the type of overlayment to be used. For many uses, the preferred thickness of resilient layer 5 may be about 0.375 inches. A preferred total thickness when resilient layer 5 is combined with an anchor sheet of thickness A, is about 0.5 inches, not including the height of hooks 4 of anchor sheet 1. When thickness A of anchor sheet 1 is about 0.125 inches and anchor sheet 1 includes resilient layer 5 of about 0.375 inches thick, a desirable walkability of the anchor sheet/resilient layer combination may be achieved.

In the above-described configuration, the material costs for the anchor sheet and resilient layer may be generally less than other configurations. For example, use of a thicker anchor sheet may increase costs. More material is required to increase the thickness of the anchor sheet because it is generally more dense than the resilient layer. Conversely, an increase in the thickness of the resilient layer is generally less expensive, but, depending on the magnitude of the increase, the walkability of the anchor sheet/resilient layer combination may be negatively affected. The use of the aforementioned thicknesses may also serve to achieve a level of durability of the anchor sheet/resilient layer combination without unduly increasing manufacturing costs.

If the combined thickness of the anchor sheet and resilient layer is greater than about 0.5 inches, the use of such anchor sheet combination may be limited in some installations. For example, a thicker anchor sheet and resilient layer combination may obstruct or interfere with a door or other nearby feature when the anchor sheet is installed.

Referring again to Figure 1, cutaway from thickness A is a countersunk area 7, which preferably has a regular geometric shape. In the present embodiment, area 7 is a portion of a circle. When combined with similar abutting anchor sheets aligned along sides 9 and 11, a 3/4 circular cut out area is formed. A fourth anchor sheet diagonally opposite anchor sheet 1 forms a complete circle having a circular cut out area and could have a "hole" 14, as described below. Typically, the cut-out area will be such that the width of the anchor sheet at 13 will be approximately half of the total thickness A of the anchor sheet. However, the width of the anchor sheet at 13 may be other than approximately half the total thickness A. In addition, there can be a second area 14 which is cut away from the corner (the apex of the angle formed by the two sides of the square). This second area 14 also has a geometric shape (in this example, a 1/4 of a circle) so that, when combined with other anchor sheets, the anchor sheet edges are aligned so that their corners meet at the virtual intersection of the four corners, and a second smaller circle is formed in the completed anchor sheet structure.

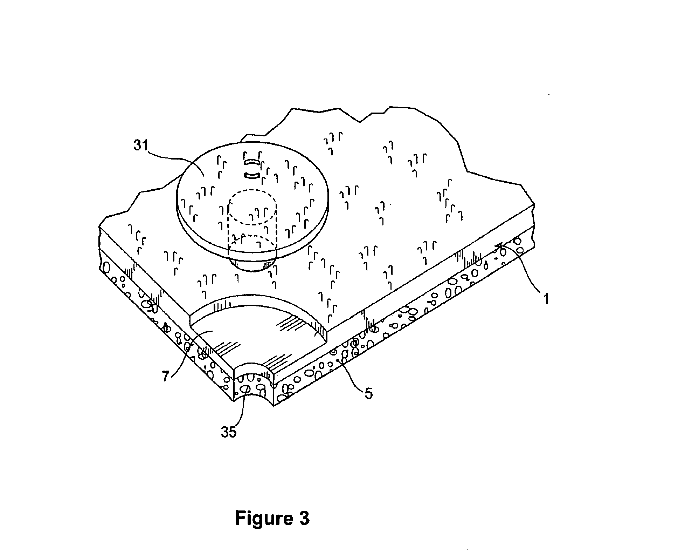

Thus, a circular cut away area 14 within a second larger circular cut out area 7 is created when four similar anchor sheets abut each other, as shown in Figure 2. A complementary corner piece or attachment device 31 can then be added which will match the shape and thickness of the reduced thickness portion and the shape and thickness of the cutaway area (see Figure 3). Corner piece 31 can be attached to area 7 by glue or other permanent attachment, or by detachable attachment such as pressure sensitive adhesive or a hook and loop, or post and hole type. Fastening devices such as hook and loop or a screw or nail may be used to attach the corner pieces to a floor to hold the anchor sheet to the floor at only a few discrete points by use of the corner pieces, with or without direct attachment to the anchor sheets. However, it is not necessary to attach any part of the anchor sheet 1 or corner piece 31 directly to the floor. A preferred "snap-fit" attachment system is described, among others, in the above-detailed application entitled "Anchor sheet positioning and connection system". With this form of attachment, relative movement between anchor sheets can be achieved, although the anchor sheets are attached directly to each other. It will also be appreciated that area 7 can have any shape or size in relation to the size of the anchor sheet and attachment piece 31 can be correspondingly bigger.

Figure 2 shows an arrangement of anchor sheets 1 and corner pieces 31 where there is a plurality of overlapping anchor sheets 111. In this example, anchor sheets 111 are squares. Except as noted herein, anchor sheets 1 and 111 have similar characteristics, and the description of one generally applies to the other (e.g., materials used for manufacture). Unlike the embodiment in Figure 1, anchor sheets 111 do not abut each other in one plane only. Rather, anchor sheets 111 have an underlay area 15 in which there is a lower portion edge 16. Underlay area 15 is indicated in Figure 2 by a grid marking, but underlay area 15 is part of anchor sheet 111. Underlay area 15 is configured to lie under overlap area 19 on an adjacent sheet 111. Overlap area 19 extends on two sides of each sheet 111, and underlay area 15 extends on the other two sides. Overlap area 19 overlaps the underlay area 15 of each sheet 111, for instance, along an area 20 (the area between the top abutment edge at the dotted line). Overlap and underlay areas 19 and 15 may be configured to extend from anchor sheet 111 by a similar amount. This enables underlay area 15 to generally support overlay area 19. However, the degree of overlap need not be complete. For example, overlap area 19 may extend a fraction as far as underlay area 15. Such unmatched overlap can affect the degree of support provided at overlap area 20. In an embodiment, each of overlap area 19 and underlay area 15 may extend from sheet 111 by two inches, and preferably extend by one inch, to form a generally uniform overlap thereof in area 20. The thickness of the overlap area 19 may be approximately half the thickness of thickness A.

An area of reduced thickness 21 is formed in the general vicinity of where the apex of underlay edges 15. The cutout is centred over the area of abutment, for instance at 23, of the lower portion edges 16 of anchor sheets 111. The cutout is not centred over the corner line of abutment 25 created by the overlap edges extending over the area of overlap 19. In addition to the reduced thickness area 21 (similar to area 7 in Figure 1) there is a cutaway area 23.

It is possible to use an embodiment by providing a reduced thickness area along any edge (or portion of an edge) of a modular anchor sheet, having a cut away area within the reduced thickness area to provide a countersink for use with the attachment devices described. A reduced thickness area surrounding a cut away area may also be located anywhere in the interior of an anchor sheet for use of an attachment device at that interior point. However, this is generally not preferred, unless the attachment device is to be attached to the floor because an attachment device at an interior point can obviously not connect two anchor sheets together.

If an overlapping arrangement is used, the extent of underlay edges 15 and overlap 19 need not be along more than one side, nor need it be along an entire side. Overlap may occur at just a portion of one side enough to permit portions of co-operating anchor sheets 1 to overlap. Similarly, the particular shape of such overlapping pieces may be varied as long as the overlap is sufficient to achieve the functions described herein.

In one embodiment, anchor sheets 1 are square, of similar size and shape, and have sides in the range of 24 to 48 inches, although anchor sheets outside of this range may also be used.

Anchor sheets 111 may be made of an extruded or injection molded material in which the two pieces are thermally bonded so as to form the overlap 19 and underlay area 15. Sheets 111 may be cut by a gauge or jig. Anchor sheet modules 111 may be die cut. The layer of hooks may be thermally bonded to the surface of the top sheet. Alternatively, the complete module (potentially including hooks, and the two "layers" of the module) can be injection-molded using a one- or two- step or multi-step process mold, using materials such as polypropylene or polyethylene.

The overlap 19 and underlay 15 areas of the sheets 111 may be provided with means for detachable or permanent attachment, or the underlay areas 15 of an adjacent sheet may simply lie underneath and support the overlap areas 19 without any form of attachment. Preferably, however, any attachment provides for relative movement between adjacent sheets. The snap fit arrangement described in the above-detailed application entitled "Anchor Sheet Positioning and Connection System" could be suitable. Possibly, the sheets 111 may also be made with corresponding registering bumps and indentations (not shown) in the overlap 19 and underlay 15 portions of sheets 111 to assist in retaining sheets 111 together and in alignment during installation.

In cases where hook and loop systems or hooks are provided for, the hooks may be temporarily covered by a hard slip covering as discussed in United States Patent No. 6,306,477, or a soft covering as disclosed in United States Patent No. 4,822,658 to temporarily prevent premature engagement of the hooks to the loops.

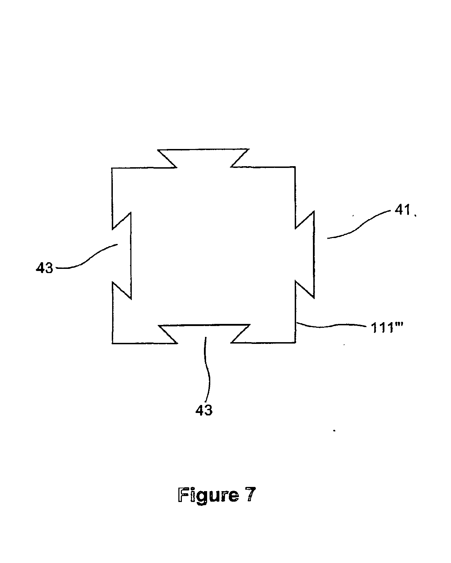

Anchor sheet 111 may alternatively be configured to work in conjunction with one or more differently configured anchor sheets. For example, a first type of anchor sheet (not shown) could be constructed to have complementary corner pieces (such as 31 in Figure 3) attached or integrally molded to the corners thereof. A second complementary anchor sheet, such as anchor sheet 111 would receive the corner pieces in a similar manner as described for the preferred embodiment. Alternatively, two or more anchor sheets could be configured to have an interlocking keystone or jigsaw puzzle like shape. An example of an interlocking keystone anchor sheet 111"' is illustrated in Figure 7. If such an arrangement is used, then each sheet is preferably made to overlap with an adjacent anchor sheet at some portion thereof to inhibit separation and bending of adj acent anchor sheets away from their common plane. However, the keystone male in portion 41 could be made smaller than the opening so that some relative movement between the sheets could be possible while still being interlocked.

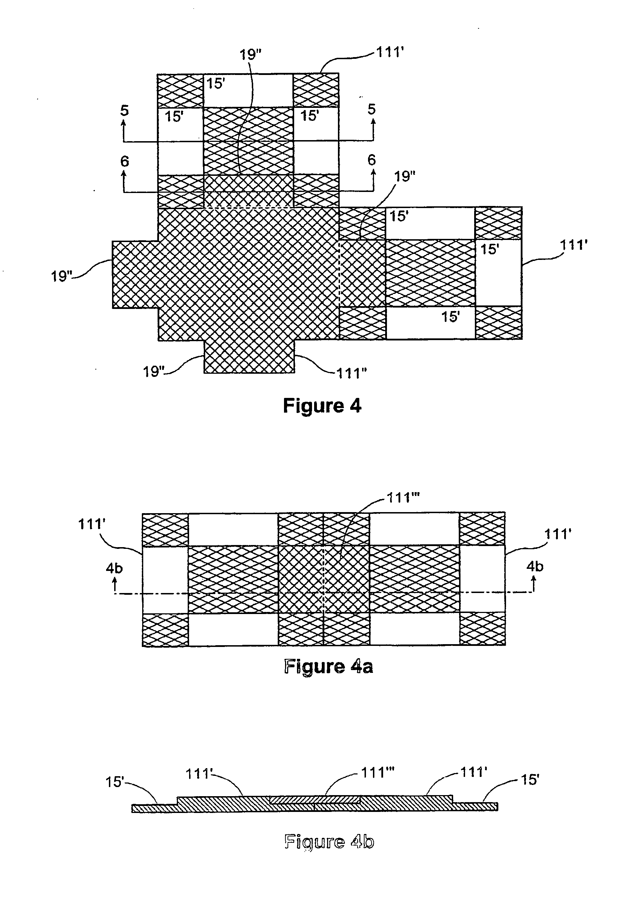

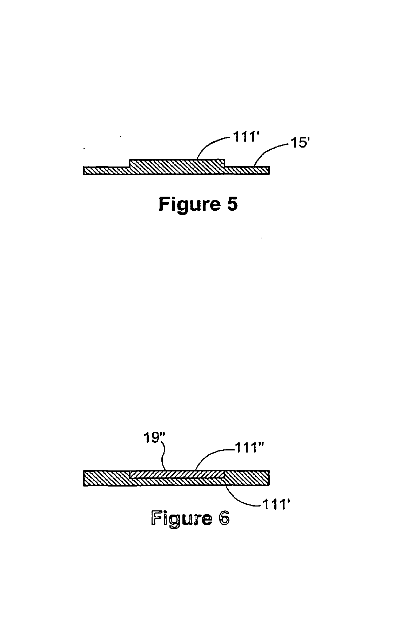

Referring to Figures 4 to 6, anchor sheets 111' (shown in white and light grey) and 111" (shown in dark grey) are different yet configured to be complementary to one another. The shading of sheets 111' and 111" in Figure 4 is done merely to distinguish the two configurations. These anchor sheets are arranged, positioned, or connected to one another in a similar manner as described for the preferred embodiment. These anchor sheets differ from the preferred embodiment in that anchor sheet 111' has only an underlay areas 15' which cooperate with overlay areas 19" of anchor sheet 111". The dashed line in Figure 4 shows the extent of the underlay area 15' of anchor sheet 111'. Figures 4a and 4b illustrates a similar arrangement wherein anchor sheet 111"' serves to connect anchor sheets 111'.

Referring again to Figure 1, the thickness A is 1/8 of an inch, and the thickness of the anchor sheet at 13 is 1/16 of an inch. (Similarly, the overall thickness of anchor sheet 111 may be 1/8 of an inch, with the thickness of the underlay area 15 being 1/16 of an inch.) The thickness of the resilient layer 5 is in the range from approximately 1/4 of an inch to 3/8 of an inch, depending on the desired resiliency and amount of surface traffic. Hooks 4 of top surface layer 3 have a density that may range from about 160 to 1200 hooks per square inch, and may be as high as 2000 hooks per square inch. The preferred density is approximately 230 hooks per square inch.

The preferred materials for anchor sheet 1 and resilient layer 5 are polypropylene and polyethylene. The preferred plastic material for anchor sheet 1 is polypropylene, such as Accutuf® Impact Copolymer Developmental Grade 3934X sold by BP Amico, or ExxonMobil PP7805 E2 copolymer grade for compounding or injection molding. Accutuf® has a melt flow index of 100, a tensile yield strength of 4100 psi, a flexural modulus of 250 x 10³ psi. PP7805 E2 has a melt flow index of 80 (@ T=230 °C, F=2.16 kg), and a tensile strength at yield of 33 MPa (50 mm/min). Other plastics may be used such as those sold as STAMYLAN (TM) P 112MN40, with an ISO 1873 indication of PP-H or other thermoplastic materials. Stamylan (TM) has a melt flow index of 50 (@ T=230 °C, F=2.16 kg), a flexural modulus of 1900 MPa, proportional strength of 35 MPa, ultimate strain of greater than 50%, and a density of 910 kg/m³ and a melting point of approximately 160 °C. Other polypropylenes such as those having lower or higher melt flow indexes, for example, 80 or 100, may also be used. It will be appreciated that other materials may also be used in the injection process, including polyethylene terephthalate, nylon and other polymers. In general, the plastic from which the sheet is manufactured has a flexural modulus of between 1200 and 2600 MPa (ASTM D790), or a flexural modulus of between 1300 and 2500 MPa, or a flexural modulus of between 1400 and 2400 MPa, or a flexural modulus of between 1500 and 2300 MPa, or a flexural modulus of between 1600 and 2200 MPa, or a flexural modulus of between 1700 and 2100 MPa, or a flexural modulus of between 1800 and 2000 MPa.

In a preferred embodiment, resilient layer 5 is made from low density polyethylene with a density of approximately 30 kg/m³. Other foams having a suitable compression force deflection test may be used, and are of a suitable material such as polyurethane or rubber. The preferred foam has a compression force deflection (ASTM D3574 - C) which is the same or very near to that of the disclosed polyethylene foam that is 3/8 inches thick and has a density of 30 kg/m³.

ASTM standards referred to herein are available from ASTM International, 100 Barr Harbor Drive, P.O. Box C700, West Conshohocken, Pennsylvania 19428-2959.

ASTM D3574, Test C, is the compression force deflection test (50% compression) as set out in designation D 3574-01 on January 22, 2003. The value obtained in the test is that set out as the standard, i.e., 50 mm by 50 mm by 25 mm in thickness.

Flexural modulus is determined according to ASTM D790 at a temperature of 23°C.

In alternative embodiments, anchor sheet 1 is made of thin polycarbonate or polyester. For thick covering materials such as stone or ceramic, anchor sheet 1 may be as thick as 1/4 of an inch or even greater. Thickness may vary depending upon the covering material and the stability requirements for any covering such as carpet. It is also possible for anchor sheet 1 to be made of thin sheet metal, carbon fibres or some form of polymer.

Anchor sheets 1 may be any size convenient for sale, transportation or installation, typically in the range of 12 inches by 12 inches square to 36 inches by 36 inches square. As noted, anchor sheet 1 is an approximately 24 inches by 24 inches square. In an alternative embodiment, anchor sheet 1 is an approximately 25 inches by 25 inches square.

Anchor sheets 1 may be manufactured using some convenient method such as the injection moulding and coining method disclosed in the above-detailed patent application entitled "System and Methods of Manufacturing Hook Plates". The referenced application discloses that, in order to manufacture an anchor sheet or hook plate, injection molding is used. The hook plate manufactured by the molding apparatus (not shown) may be a square that is 24 by 24 inches, and has 1/8 of an inch thickness. Stems integral with the hook plate are used to form the hooks, and may be 1mm high and 0.55mm in diameter. The density of stems may be approximately 230 per square inch, with a distance between stems of 1.8 mm arranged in a regular triangle, or approximately 128,000 stems on a plate.

The polypropylene material is injected into the mold at a temperature of approximately 280 °C and a pressure of approximately 150 bar, while the mold is internally cooled to a temperature of approximately 60 °C. Under these constraints, the injection time is approximately 2 seconds, the holding time is approximately 12 seconds, the cooling time is approximately 35 seconds, and the ejection time is approximately six seconds, for a total cycle time of approximately 55 seconds. Due to the large number of small stems being molded across the plate, it is important that the work-piece be ejected from the mold before the shrinkage of the work-piece is sufficient to shear the stems as they sit in the array of cavities in the mold. In the molding process of the present description, the total holding and cooling time is approximately 47 seconds, and it has been found that letting the hook plate cool for longer than this time results in shearing of the stems from the rest of the hook plate under the given pressure conditions for the material. Also, with the large number of small stems being molded across the plate, it is important that the hook plate be ejected from the mold at approximately the same time across the entire work-piece. Air ejectors may be used for this purpose.

Once the hook plate is removed from the mold, it is allowed to passively cool to room temperature. This step is not necessary if the subsequent coining parameters are adjusted to compensate. When removed from the mold, the hook plate will have a surface temperature of approximately 60°C.

The stems are coined into an array of mushroom-headed hooks by engaging a heated coining plate onto the tops of the array of stems, melting (or softening) the tops of the stems and deforming them into a mushroom-head shape. A generally planar coining plate may be engaged by lowering it to uniformly apply pressure to the tops of the stems.

The coining plate is preferably made of steel, and is heated electrically. The contact surface of the coining plate is relatively flat and smooth, having no substantial designed cavities therein for forming the heads.

The coining plate is heated above the melting temperature of the material of array of stems, and is then lowered so that the coining surface engages the tops of array of stems. This causes the plastic in tops of array of stems to become molten and deform, creating an array of mushroom heads or hooks.

Placed beneath the uncoined plate is a compressible resilient layer made of any resilient material that is more resilient and compressible than the material of the work-piece being coined. While not essential, the resilient layer provides a cushioning effect underneath the uncoined hook plate. Initially the downward force of the coining plate onto the stems and the heat transfer thereto is not sufficient to significantly cause the stem heads to deform, as the resilient layer begins to compress, until the elastic resistance of resilient layer and the heat transfer are sufficient to alter the shape of the stem heads, thereby causing the stems to form an array of hooked heads. The resilient layer may lessen any effect which might be caused by the coining surface of the coining plate not being parallel with the stem heads. This causes the stems to form the heads at substantially the same time, thereby producing generally uniform hooks for the hook plate.

Numerous modifications, variations, and adaptations may be made to the particular embodiments of the invention described above without departing from the scope of the invention, which is defined in the following claims.

## Claims

1. An anchor sheet for underlying a floor covering comprising:
a plastic sheet having a thickness (A) of between 1.587 mm (1/16 inches) and 19.05 mm (3/4 inches) and having a flexural modulus (ASTM D790) of between 700 and 3600 MPa.

2. The anchor sheet of claim 1, further comprising a resilient layer (5) secured to a first side of the plastic sheet and having a compression force deflection (ASTM D3574-C) that is within about 30 percent of the compression force deflection of a low density polyethylene layer 9.525 mm (3/8 inches) thick and a density of 30 kg/m³.

3. The anchor sheet of claim 1 or 2, wherein in the plastic sheet is an injection-molded thermoplastic.

4. The anchor sheet of any preceding claim, wherein the plastic is made of at least one of polyethylene and polypropylene.

5. The anchor sheet of any preceding claim, wherein the plastic sheet has a thickness of about 3.175 mm (1/8 inches).

6. The anchor sheet of any preceding claim, wherein a second side of the plastic sheet is covered by hooks integrally molded therewith.

7. The anchor sheet of claim 6, wherein the hooks have a density between 160 hooks per square inch to 1200 hooks per 645.16 mm² (square inch).

8. The anchor sheet of claim 7, wherein the hooks have a density of approximately 230 hooks per 645.16 mm² (square inch).

9. The anchor sheet of any preceding claim, wherein the resilient layer comprises, or consists essentially of, polyethylene.

10. The anchor sheet of any preceding claim, wherein the plastic sheet has a flexural modulus of between 1200 and 2600 MPa.

11. The anchor sheet of claim 10, wherein the plastic sheet has a flexural modulus of between 1300 and 2500 MPa.

12. The anchor sheet of claim 10, wherein the plastic sheet has a flexural modulus of between 1500 and 2300 MPa.

13. The anchor sheet of claim 10, wherein the plastic sheet has a flexural modulus of between 1700 and 2100 MPa.

14. The anchor sheet of claim 10, wherein the plastic sheet has a flexural modulus of between 1800 and 2000 MPa.

15. The anchor sheet of any preceding claim, wherein the anchor sheet is a square and has an outer planar dimension in the range of between approximately 304.8 mm by 304.8 mm (12 inches by 12 inches) and approximately 914.4 mm by 914.4 mm (36 inches by 36 inches).

16. The anchor sheet of claim 15, wherein the anchor sheet is approximately 609.6 mm by 609.6 mm (24 inches by 24 inches).

17. The anchor sheet of claim 1, wherein the sheet is injection molded.

18. The anchor sheet of claim 1, wherein a first surface bears a field of hooks, the hooks having a density between 160 hooks per 645.16 mm² (square inch) to 1200 hooks per 645.16 mm² (square inch).

19. The anchor sheet of claim 1, wherein the anchor sheet is shaped to have a substantially flat lower layer part and a substantially flat upper layer part of the same size as the lower layer part, and having an upper surface substantially covered in hooks for detachable attachment to a decorative covering, in which the upper layer part is offset from the lower layer part an equal amount along two adjacent edges to expose two adjacent portions of the lower layer, and wherein the upper layer part bears a filed of hooks having a density between 160 hooks per 645.16 mm² (square inch) into 1200 hooks per 645.16 mm² (square inch).

20. The anchor sheet of claim 19, wherein the sheet has a thickness between 1.587 mm and 19.05 mm (0.062 and 0.75 inches) in its thickest part.

21. The anchor sheet of claim 20, wherein the sheet has a thickness of approximately 3.175 mm (0.125 inches) at its thickest part.

22. The anchor sheet of claim 19, wherein the sheet is injection molded.

23. The anchor sheet of claim 19, the anchor sheet further comprising:
a lower surface opposite the upper surface, the lower surface being covered with a resilient layer;
a recess reducing the thickness of the anchor sheet in a first area; and
wherein the sheet has a reduced thickness between 0.508 mm and 19.05 mm (0.020 inches and 0.75 inches).

24. The anchor sheet of claim 23, wherein the sheet has a thickness between 1.575 mm and 19.05 mm (0.062 and 0.75 inches) in its thickest part.

25. The anchor sheet of claim 24, wherein the sheet has a thickness of approximately 3.175 mm (0.125 inches) at its thickest part.

26. The anchor sheet of claim 25, wherein the sheet is injection molded.

27. The anchor sheet of claim 19, further comprising a resilient layer made of low density polyethylene attached to the second surface.

28. The anchor sheet of claim 19, wherein the sheet is a polypropylene sheet of between 15.748 mm and 12.7 mm (0.62 inches and 0.50 inches) thickness; and the anchor sheet further comprises a resilient layer made of polyethylene foam of a density of at least 20 kg/m³ and of thickness of between 6.35 mm and 9.525 mm (1/4 inches and 3/8 inches).

29. The anchor sheet of claim 19 in which the anchor sheet provides for at least one area of reduced thickness at least along one edge.

30. The anchor sheet of claim 19, wherein the field of hooks has a density of approximately 330 hooks per 645.16 mm² (square inch).

31. The anchor sheet of claim 19, wherein the field of hooks has a density of approximately 230 hooks per 645.16 mm² (square inch).

## Patentansprüche

1. Befestigungsplatte zum Unterlegen eines Bodenbelags, mit:
einer Kunststoffplatte mit einer Dicke (A) zwischen 1,587 mm (1/16 Zoll) und 19,05 mm (3/4 Zoll) und mit einem Biegemodul (ASTM D790) zwischen 700 und 3600 MPa.

2. Befestigungsplatte nach Anspruch 1, ferner mit einer elastischen Schicht (5), die auf einer ersten Seite der Kunststoffplatte befestigt ist und eine Druckkraftverformung (ASTM D3574-C) hat, die innerhalb von etwa 30 Prozent der Druckkraftverformung einer Polyethylenschicht niedriger Dichte mit einer Dicke von 9,525 mm (3/8 Zoll) und einer Dichte von 30 kg/m³ liegt.

3. Befestigungsplatte nach Anspruch 1 oder 2, wobei in der Kunststoffplatte ein spritzgegossener Thermoplast ist.

4. Befestigungsplatte nach einem der vorhergehenden Ansprüche, wobei der Kunststoff aus Polyethylen und/oder Polypropylen besteht.

5. Befestigungsplatte nach einem der vorhergehenden Ansprüche, wobei die Kunststoffplatte eine Dicke von etwa 3,175 mm (1/8 Zoll) hat.

6. Befestigungsplatte nach einem der vorhergehenden Ansprüche, wobei eine zweite Seite der Kunststoffplatte mit angeformten Haken überzogen ist.

7. Befestigungsplatte nach Anspruch 6, wobei die Haken eine Dichte zwischen 160 Haken pro Quadratzoll und 1200 Haken pro 645,16 mm² (Quadratzoll) haben.

8. Befestigungsplatte nach Anspruch 7, wobei die Haken eine Dichte von annähernd 230 Haken pro 645,16 mm² (Quadratzoll) haben.

9. Befestigungsplatte nach einem der vorhergehenden Ansprüche, wobei die elastische Schicht Polyethylen aufweist oder im Wesentlichen daraus besteht.

10. Befestigungsplatte nach einem der vorhergehenden Ansprüche, wobei die Kunststoffplatte einen Biegemodul zwischen 1200 und 2600 MPa hat.

11. Befestigungsplatte nach Anspruch 10, wobei die Kunststoffplatte einen Biegemodul zwischen 1300 und 2500 MPa hat.

12. Befestigungsplatte nach Anspruch 10, wobei die Kunststoffplatte einen Biegemodul von 1500 bis 2300 MPa hat.

13. Befestigungsplatte nach Anspruch 10, wobei die Kunststoffplatte einen Biegemodul zwischen 1700 und 2100 MPa hat.

14. Befestigungsplatte nach Anspruch 10, wobei die Kunststoffplatte einen Biegemodul zwischen 1800 und 2000 MPa hat.

15. Befestigungsplatte nach einem der vorhergehenden Ansprüche, wobei die Befestigungsplatte ein Quadrat ist und eine äußere ebene Abmessung im Bereich zwischen annähernd 304,8 x 304,8 mm (12 x 12 Zoll) und annähernd 914,4 x 914,4 mm (36 x 36 Zoll) hat.

16. Befestigungsplatte nach Anspruch 15, wobei die Befestigungsplatte annähernd 609,6 x 609,6 mm (24 x 24 Zoll) groß ist.

17. Befestigungsplatte nach Anspruch 1, wobei die Platte spritzgegossen ist.

18. Befestigungsplatte nach Anspruch 1, wobei eine erste Fläche ein Hakenfeld trägt, wobei die Haken eine Dichte zwischen 160 Haken pro 645,16 mm² (Quadratzoll) und 1200 Haken pro 645,16 mm² (Quadratzoll) haben.

19. Befestigungsplatte nach Anspruch 1, wobei die Befestigungsplatte eine solche Form hat, dass sie einen im Wesentlichen flachen unteren Schichtteil und einen im Wesentlichen flachen oberen Schichtteil der gleichen Größe wie der untere Schichtteil hat, und wobei eine obere Fläche im Wesentlichen mit Haken überzogen ist, zur lösbaren Befestigung an einem dekorativen Belag, bei dem der obere Schichtteil bezüglich des unteren Schichtteils um einen gleichen Betrag entlang zweier benachbarter Kanten versetzt ist, um zwei benachbarte Abschnitte der unteren Schicht freizulegen, und wobei der obere Schichtteil ein Hakenfeld mit einer Dichte zwischen 160 Haken pro 645,16 mm² (Quadratzoll) und 1200 Haken pro 645,16 mm² (Quadratzoll) trägt.

20. Befestigungsplatte nach Anspruch 19, wobei die Platte eine Dicke zwischen 1,587 und 19,05 mm (0,062 und 0,75 Zoll) in ihrem dicksten Teil hat.

21. Befestigungsplatte nach Anspruch 20, wobei die Platte eine Dicke von etwa 3,175 mm (0,125 Zoll) in ihrem dicksten Teil hat.

22. Befestigungsplatte nach Anspruch 19, wobei die Platte spritzgegossen ist.

23. Befestigungsplatte nach Anspruch 19, wobei die Befestigungsplatte ferner aufweist:
eine untere Fläche gegenüber der oberen Fläche, wobei die untere Fläche mit einer elastischen Schicht überzogen ist;
eine Aussparung, die die Dicke der Befestigungsplatte in einem ersten Bereich reduziert; und
wobei die Platte eine reduzierte Dicke zwischen 0,508 und 19,05 mm (0,020 und 0,75 Zoll) hat.

24. Befestigungsplatte nach Anspruch 23, wobei die Platte eine Dicke zwischen 1,575 und 19,05 mm (0,062 und 0,75 Zoll) in ihrem dicksten Teil hat.

25. Befestigungsplatte nach Anspruch 24, wobei die Platte eine Dicke von annähernd 3,175 mm (0,125 Zoll) in ihrem dicksten Teil hat.

26. Befestigungsplatte nach Anspruch 25, wobei die Platte spritzgegossen ist.

27. Befestigungsplatte nach Anspruch 19, ferner mit einer elastischen Schicht, die aus Polyethylen niedriger Dichte besteht und die auf der zweiten Fläche befestigt ist.

28. Befestigungsplatte nach Anspruch 19, wobei die Platte eine Polypropylenplatte mit einer Dicke zwischen 15,748 und 12,7 mm (0,62 und 0,50 Zoll) ist und die Befestigungsplatte ferner eine elastische Schicht aufweist, die aus Polyethylenschaum mit einer Dichte von mindestens 20 kg/m³ und einer Dicke zwischen 6,35 und 9,525 mm (1/4 und 3/8 Zoll) besteht.

29. Befestigungsplatte nach Anspruch 19, wobei die Befestigungsplatte mindestens einen Bereich reduzierter Dicke mindestens entlang einem Rand vorsieht.

30. Befestigungsplatte nach Anspruch 19, wobei das Hakenfeld eine Dichte von annähernd 330 Haken pro 645,16 mm² (Quadratzoll) hat.

31. Befestigungsplatte nach Anspruch 19, wobei das Hakenfeld eine Dichte von annähernd 230 Haken pro 645,16 mm² (Quadratzoll) hat.

## Revendications

1. Feuille d'ancrage destinée à être mise en place sous un revêtement de sol, ladite feuille comprenant :
une feuille plastique ayant une épaisseur (A) comprise entre 1,587 mm (1/16 de pouce) et 19,05 mm (3/4 de pouce) et un module d'élasticité à la flexion (ASTM D790) compris entre 700 et 3600 MPa.

2. Feuille d'ancrage selon la revendication 1, comprenant en outre une couche élastique (5) fixée sur une première face de la feuille plastique et ayant une compression/déflection (ASTM D3574-C) de l'ordre de 30 % de la compression/déflection d'une couche de polyéthylène de faible densité épaisse de 9,525 mm (3/8 de pouce) et ayant une densité de 30 kg/m³.

3. Feuille d'ancrage selon la revendication 1 ou la revendication 2, où la feuille plastique comprend un thermoplastique moulé par injection.

4. Feuille d'ancrage selon l'une des revendications précédentes, où le plastique est composé d'au moins un élément entre le polyéthylène et le polypropylène.

5. Feuille d'ancrage selon l'une des revendications précédentes, où la feuille plastique a une épaisseur de près de 3,175 mm (1/8 de pouce).

6. Feuille d'ancrage selon l'une des revendications précédentes, où une deuxième face de la feuille plastique est couverte de crochets intégrés par moulage à celle-ci.

7. Feuille d'ancrage selon la revendication 6, où les crochets ont une densité comprise entre 160 crochets par pouce carré et 1200 crochets par 645,16 mm² (pouce carré).

8. Feuille d'ancrage selon la revendication 7, où les crochets ont une densité d'environ 230 crochets par 645,16 mm² (pouce carré).

9. Feuille d'ancrage selon l'une des revendications précédentes, où la couche élastique comprend du polyéthylène, ou est composée essentiellement de polyéthylène.

10. Feuille d'ancrage selon l'une des revendications précédentes, où la feuille plastique a un module d'élasticité à la flexion compris entre 1200 et 2600 MPa.

11. Feuille d'ancrage selon la revendication 10, où la feuille plastique a un module d'élasticité à la flexion compris entre 1300 et 2500 MPa.

12. Feuille d'ancrage selon la revendication 10, où la feuille plastique a un module d'élasticité à la flexion compris entre 1500 et 2300 MPa,

13. Feuille d'ancrage selon la revendication 10, où la feuille plastique a un module d'élasticité à la flexion compris entre 1700 et 2100 MPa.

14. Feuille d'ancrage selon la revendication 10, où la feuille plastique a un module d'élasticité à la flexion compris entre 1800 et 2000 MPa.

15. Feuille d'ancrage selon l'une des revendications précédentes, où ladite feuille d'ancrage est carrée et présente des dimensions extérieures planes comprises entre environ 304,8 mm sur 304,8 mm (12 pouces sur 12 pouces) et environ 914,4 mm sur 914,4 mm (36 pouces sur 36 pouces).

16. Feuille d'ancrage selon la revendication 15, où ladite feuille d'ancrage est d'environ 609,6 mm sur 609,6 mm (24 pouces sur 24 pouces).

17. Feuille d'ancrage selon la revendication 1, où ladite feuille est moulée par injection.

18. Feuille d'ancrage selon la revendication 1, où une première surface supporte un champ de crochets, lesdits crochets ayant une densité comprise entre 160 crochets par 645,16 mm² (pouce carré) et 1200 crochets par 645,16 mm² (pouce carré).

19. Feuille d'ancrage selon la revendication 1, où ladite feuille d'ancrage est formée pour présenter une partie de couche inférieure sensiblement plate et une partie de couche supérieure sensiblement plate de mêmes dimensions que la partie de couche inférieure sensiblement plate, et ayant une surface supérieure sensiblement couverte de crochets pour une fixation amovible à un revêtement décoratif, où la partie de couche supérieure est décalée de la partie de couche inférieure d'une valeur égale sur deux bords adjacents pour exposer deux parties adjacentes de la couche inférieure, et où la partie de couche supérieure supporte un champ de crochets ayant une densité comprise entre 160 crochets par 645,16 mm² (pouce carré) et 1200 crochets par 645,16 mm² (pouce carré).

20. Feuille d'ancrage selon la revendication 19, où ladite feuille a une épaisseur comprise entre 1,587 mm et 19,05 mm (0,062 et 0,75 pouces) dans sa partie la plus épaisse.

21. Feuille d'ancrage selon la revendication 20, où la feuille a une épaisseur d'environ 3,175 mm (0,125 pouces) dans sa partie la plus épaisse.

22. Feuille d'ancrage selon la revendication 19, où la feuille est moulée par injection.

23. Feuille d'ancrage selon la revendication 19, ladite feuille d'ancrage comprenant en outre:
une surface inférieure opposée à la surface supérieure, la surface inférieure étant recouverte par une couche élastique ;
un retrait réduisant l'épaisseur de la feuille d'ancrage dans une première zone ; et
où la feuille a une épaisseur réduite comprise entre 0,508 mm et 19,05 mm (0,020 pouces et 0,75 pouces).

24. Feuille d'ancrage selon la revendication 23, où ladite feuille a une épaisseur comprise entre 1,575 mm et 19,05 mm (0,062 et 0,75 pouces) dans sa partie la plus épaisse.

25. Feuille d'ancrage selon la revendication 24, où ladite feuille a une épaisseur d'environ 3,175 mm (0,125 pouces) dans sa partie la plus épaisse.

26. Feuille d'ancrage selon la revendication 25, où ladite feuille est moulée par injection.

27. Feuille d'ancrage selon la revendication 19, comprenant en outre une couche élastique en polyéthylène de faible densité fixée à la deuxième surface.

28. Feuille d'ancrage selon la revendication 19, où ladite feuille est une feuille en polypropylène d'épaisseur comprise entre 15,748 mm et 12,7 mm (0,62 pouces et 0,50 pouces); et où ladite feuille d'ancrage comprend en outre une couche élastique en mousse polyéthylène d'une densité minimale de 20 kg/m³ et d'une épaisseur comprise entre 6,35 mm et 9,525 mm (1/4 de pouce et 3/8e de pouce).

29. Feuille d'ancrage selon la revendication 19, où ladite feuille d'ancrage présente au moins une zone d'épaisseur réduite sur un bord au moins.

30. Feuille d'ancrage selon la revendication 19, où le champ de crochets a une densité d'environ 330 crochets par 645,16 mm² (pouce carré).

31. Feuille d'ancrage selon la revendication 19, où le champ de crochets a une densité d'environ 230 crochets par 645,16 mm² (pouce carré).
